# DEMANDE DE BREVET EUROPEEN

(11) **EP 4 311 086 A1**
(43) Date de publication de la demande: **24.01.2024**
(21) Numéro de dépôt: 23186535.3
(22) Date de dépôt: 19.07.2023
(51) Int. Cl.: H02K 15/02, H02K 1/16

(54) **DISPOSITIF DE FABRICATION D'UN EMPILEMENT DE TÔLES**

(30) Priorité: 22.07.2022 FR 2207534
(71) Demandeur: Moteurs Leroy-Somer, 16915 Angouleme (FR)
(72) Inventeur: VOHLGEMUTH, Patrick, 16560 Anais (FR)
(74) Mandataire: Cabinet Nony

(57) **Abrégé**

Dispositif (1) de fabrication d'un empilement de tôles (E) pour une machine électrique tournante, chaque tôle comportant une pluralité de secteurs (10) de tôle formant des encoches (11), les tôles ménageant un alésage central,
le dispositif (1) comportant un mandrin (20) pour recevoir les secteurs (10) de tôles empilés, le mandrin (20) comportant :
- un corps de mandrin (25) pourvu de rainures longitudinales (26),
- des barreaux (30) reçus dans les rainures longitudinales (26) du corps de mandrin (25), les barreaux (30) étant magnétisables,
- un système de magnétisation (40) des barreaux, et
- des linguets d'alignement (50), destinés à être reçus dans les encoches (11) des tôles de façon à assurer l'alignement des encoches (11).

## Description

### Domaine technique

La présente invention concerne les machines électriques tournantes et plus particulièrement la fabrication des empilements de tôles, notamment pour les stators de telles machines.

### Technique antérieure

Il est connu de réaliser un empilement de tôles en utilisant des tôles comportant chacune une pluralité de secteurs de tôle formant des encoches. L'utilisation de secteurs entraîne néanmoins une complexification de la fabrication de l'empilement de tôles.

En effet, lorsqu'une tôle est découpée complète, la construction de l'empilement de tôles est assez simple. Le plus souvent, les tôles sont alors enfilées sur un mandrin dont le diamètre est sensiblement égal à l'alésage des tôles. Des portions du diamètre extérieur peuvent être animées d'un petit déplacement radial, qui permet l'expansion du mandrin et permet de rattraper les jeux dans l'alésage des tôles pour un meilleur alignement, et leur rétractation permet de libérer l'empilement de tôles lorsque ce dernier est terminé.

Pour l'empilage de secteurs de tôles, il n'est pas possible d'utiliser le principe de l'expansion pour un meilleur alignement de l'alésage. En effet, une poussée radiale de l'intérieur vers l'extérieur aurait pour conséquence de séparer les secteurs.

Il existe donc un besoin pour bénéficier d'un dispositif permettant de fabriquer de manière aisée et peu coûteuse un empilement de tôles comportant chacune une pluralité de secteurs de tôle.

### Résumé de l'invention

L'invention vise à répondre à ce besoin et elle y parvient, selon l'un de ses aspects, grâce à un dispositif de fabrication d'un empilement de tôles pour une machine électrique tournante, chaque tôle comportant une pluralité de secteurs de tôle formant des encoches, les tôles ménageant un alésage central, le dispositif comportant un mandrin pour recevoir les secteurs de tôles empilés, le mandrin comportant :
- un corps de mandrin pourvu de rainures longitudinales,
- des barreaux reçus dans les rainures longitudinales du corps de mandrin, les barreaux étant magnétisables,
- un système de magnétisation des barreaux, et
- des linguets d'alignement, destinés à être reçus dans les encoches des tôles de façon à assurer l'alignement des encoches.

Les secteurs d'une tôle peuvent ne pas être reliés entre eux. Ils peuvent notamment être séparés. Une tôle peut comporter entre 3 et 20 secteurs, mieux entre 4 et 16 secteurs, par exemple 6 ou 8 secteurs.

L'utilisation de tôles en secteurs permet avantageusement de minimiser les chutes de découpage inhérente au découpage en tôle complète, et ainsi de limiter la consommation de tôle et de minimiser les coûts de l'outillage de découpage. Il permet également d'utiliser si nécessaire des tôles différentes pour le rotor et pour le stator. Cela permet par exemple d'utiliser des tôles moins coûteuses pour le rotor, et des tôles de meilleure qualité pour le stator. Il permet également de réaliser des machines de grand diamètre.

Dans le dispositif de fabrication selon l'invention, le système de magnétisation permet de magnétiser les barreaux, ceux-ci pouvant ainsi attirer, lorsque magnétisés, les secteurs de tôle qui viennent en rapprochement du corps de mandrin, subissant une poussée radiale de l'extérieur vers le centre. Cela permet d'obtenir une bonne géométrie finale de l'empilement de tôles. Ce dispositif permet une très grande facilité dans l'opération d'empilage. Même avec une précision relative de la position des secteurs en approche du mandrin, les secteurs se positionnent automatiquement de manière appropriée.

Le dispositif selon l'invention permet également de déposer des secteurs de tôles au fur et à mesure de la réalisation de l'empilement, cette dépose n'étant pas empêchée par le maintien des secteurs sur le mandrin grâce à la magnétisation de barreaux.

Le mandrin du dispositif de fabrication est ainsi doté de zones magnétisées, qui judicieusement disposées, permettent de créer un auto-positionnement des secteurs, et de les maintenir correctement placés jusqu'à la finalisation de l'empilage des tôles.

Ainsi, on obtient grâce à l'invention un empilement des secteurs autour d'un mandrin qui peut être automatisé, sans opération de réalignement, sans avoir recours à un moyen de dépose extrêmement précis, et sans introduire de dispositif à l'extérieur de l'empilement de tôles qui pourrait nuire à l'accessibilité lors de la dépose des secteurs.

La mise en place des secteurs est facilitée et simplifiée, et la qualité de l'empilage n'est pas dépendante de la précision de la dépose, ce qui peut faciliter l'automatisation de la dépose.

Les secteurs déjà en place sont bien maintenus, de sorte qu'ils ne risquent pas de se déplacer. Ainsi, aucune opération de replacement ou de re-conformage n'est nécessaire.

Les tôles sont fortement sensibles aux champs magnétiques.

Le corps de mandrin peut ménager un alésage central, dans lequel peut être placé le système de magnétisation des barreaux.

### Exposé de l'invention

### Corps de mandrin

Le corps de mandrin peut être réalisé dans un matériau amagnétique, notamment paramagnétique. Avantageusement, le corps de mandrin n'est pas magnétique. Cela permet de ne pas nuire au bon positionnement des secteurs.

### Barreaux

Les barreaux peuvent être réalisés dans un matériau ferromagnétique doux.

Les barreaux peuvent dépasser radialement légèrement du corps de mandrin vers l'extérieur. Par « légèrement », on entend que les barreaux dépassent du corps de mandrin d'une distance d comprise entre 0,4 et 100 mm, mieux entre 0,5 et 10 mm, voire entre 0,6 et 2 mm, étant par exemple de l'ordre de 0,5 mm ou 1 mm. Un rapport de la distance d sur le rayon du corps du mandrin peut par exemple être inférieur à 20 %, mieux inférieur à 10 %, voire inférieur à 1 %.

Ainsi, les barreaux forment le diamètre extérieur du mandrin dans son ensemble, le diamètre extérieur du mandrin correspondant sensiblement au diamètre d'alésage du stator à fabriquer. Plus précisément, le diamètre extérieur du mandrin peut être très légèrement supérieur au diamètre d'alésage du stator à fabriquer, de façon à assurer le serrage des secteurs et leur stabilité. Les faces des barreaux faisant face à l'empilement de tôles peuvent être usinées.

En outre, cette configuration permet que les tôles de l'empilement ne soient pas en contact avec le corps de mandrin, ce qui facilite l'extraction ultérieure de l'empilement de tôle du mandrin, en évitant les frottements.

Afin de faciliter l'extraction de l'empilement de tôles du mandrin une fois l'empilement terminé, le dispositif peut comporter une pente sur sa surface extérieure. Cela peut permettre une légère rétractation des barreaux vers l'axe longitudinal du dispositif, par rapport à l'empilement de tôles. La pente peut être obtenue par la forme du corps de mandrin, qui peut comporter une surface extérieure inclinée d'un angle α par rapport à un axe longitudinal du dispositif, lequel est vertical. Les barreaux peuvent du fait de cette inclinaison être également inclinés par rapport à un axe longitudinal du dispositif. En variante, la pente peut être obtenue par la forme des barreaux eux-mêmes, qui peuvent comporter une surface extérieure inclinée d'un angle α par rapport à un axe longitudinal du dispositif. La pente peut permettre une translation longitudinale des barreaux.

Les barreaux peuvent être configurés pour pouvoir être déplacés longitudinalement. Ce déplacement peut être minime, étant par exemple compris entre 0,5 et 10 mm, mieux entre 1 et 6 mm, voire entre 1,5 et 5 mm, étant par exemple de 4 mm. A cet effet, les rainures longitudinales du corps de mandrin ont une longueur mesurée selon l'axe longitudinal du dispositif qui est un peu supérieure à une longueur d'un barreau, mesurée selon l'axe longitudinal du dispositif, d'une longueur ε. La longueur ε peut être par exemple comprise entre 0,5 et 10 mm, mieux entre 1 et 6 mm, voire entre 1,5 et 5 mm, étant par exemple de 4 mm.

Les barreaux peuvent ne pas dépasser radialement du corps de mandrin vers l'intérieur de celui-ci, dans son alésage central. Ils peuvent par exemple être en retrait de l'alésage central du corps de mandrin ou bien affleurer dans celui-ci.

En variante, les barreaux peuvent dépasser radialement du corps de mandrin vers l'intérieur de celui-ci, dans son alésage central.

### Système de magnétisation

Le système de magnétisation peut comporter des bobines disposées sur des ou sur tous les barreaux dans l'alésage central du corps de mandrin.

L'utilisation de bobines permet avantageusement de moduler la magnétisation de manière très souple. On peut démarrer ou arrêter la magnétisation facilement.

Le système de magnétisation peut comporter par exemple une bobine par barreau, ou en variante une bobine pour deux barreaux, ou une bobine pour trois barreaux, notamment lorsque l'on se déplace circonférentiellement autour du corps de mandrin.

Les bobines peuvent ne pas être disposés sur les barreaux.

Dans une variante de réalisation, le système de magnétisation peut comporter des noyaux magnétiques portant des bobines, les noyaux magnétiques pouvant être entrainé en rotation et/ou en translation dans l'alésage central du corps de mandrin.

En variante encore, le système de magnétisation peut comporter des aimants permanents, par exemple disposés sur un cylindre qui peut être entrainé en rotation et/ou en translation dans l'alésage central du corps de mandrin.

En variante ou additionnellement, les aimants permanents peuvent s'activer ou se désactiver en fonction de leur position relative.

La magnétisation des barreaux peut être variable. Par exemple, elle peut être plus élevée lorsque le secteur adjacent aux barreaux est en train d'être déposé, et plus réduite lorsqu'il est seulement maintenu sur le mandrin. En particulier, on peut réduire la magnétisation dans le bas de l'empilage, car les secteurs y sont en partie maintenus également par le poids de l'empilage.

Cela peut être obtenu en modifiant le courant circulant dans les bobines en fonction de leur position, notamment en fonction de leur position circonférentielle et/ou de leur position longitudinale, le long d'un axe longitudinal du dispositif.

Le système de magnétisation peut être configuré pour que l'orientation des flux magnétiques autour du mandrin ait des pôles opposés qui se succèdent, afin d'améliorer les forces d'attraction des secteurs.

### Rangées de barreaux

Le mandrin peut comporter une unique rangée circonférentielle de barreaux autour de l'alésage central du corps de mandrin.

En variante, le mandrin peut comporter plusieurs rangées circonférentielles de barreaux réparties longitudinalement autour de l'alésage central du corps de mandrin.

Il peut par exemple comporter entre 2 et 10 rangées circonférentielles, par exemple entre 3 et 8 rangées circonférentielles, notamment 2, 3 ou 4 rangées circonférentielles de barreaux. Les rangées circonférentielles peuvent être réparties régulièrement, avec un écartement constant entre deux rangées circonférentielles consécutives.

Le nombre de rangées circonférentielles peut par exemple dépendre de la longueur de l'empilement de tôles, de son diamètre, du ratio entre sa longueur et son diamètre, par exemple.

Une longueur de l'empilement de tôles peut par exemple être comprise entre 50 mm et 3 m, voire entre 100 mm et 2 m, mieux entre 150 mm et 1,5 m, étant par exemple de 200 mm, de 1 m, voire de 2 m.

Un diamètre d'alésage de l'empilement de tôles peut être supérieur à 100 mm, mieux supérieur à 150 mm, voire supérieur à 200 mm.

### Linguets d'alignement

Les linguets d'alignement peuvent être réalisés dans un matériau amagnétique, notamment paramagnétique. Avantageusement, les linguets ne sont pas magnétiques, afin de favoriser leur pénétration dans des encoches des tôles et de ne pas l'empêcher. Cela permet de ne pas nuire au bon positionnement des secteurs.

Une largeur des linguets d'alignement en section transversale peut diminuer lorsque l'on s'éloigne d'un axe longitudinal du dispositif.

La largeur des linguets peut être sensiblement égale à l'ouverture des encoches au niveau du diamètre d'alésage de l'empilement de tôles, notamment avec un léger jeu permettant d'assurer le coulissement. En outre, cette largeur peut diminuer au fur et à mesure que le linguet s'étend dans l'encoche correspondante de l'empilement de tôles. Ainsi, l'insertion du secteur sur les linguets est facilitée, et le guidage plus aisé.

Les linguets d'alignement peuvent être reçus dans des entailles longitudinales de chaque barreau, qui s'étendent radialement au-delà du diamètre de l'alésage central ménagé dans les tôles.

Les barreaux peuvent comporter chacun une entaille longitudinale à cet effet. Une entaille d'un barreau peut être centrée par rapport audit barreau.

En variante, les linguets d'alignement peuvent être enfilés dans les encoches des tôles par le haut, étant déplacés selon un axe longitudinal du dispositif. Ils servent à assurer l'alignement des encoches des tôles. Les barreaux peuvent être dépourvus des entailles longitudinales précités, étant de surface sensiblement cylindrique faisant face aux secteurs de tôle.

Le dispositif peut comporter en outre un plateau de support des secteurs. Ce plateau de support peut être réalisé dans un matériau amagnétique. Il peut être disposé sur une base du mandrin. Ce plateau de support peut permettre également de faciliter le pressage ultérieur de l'empilement de tôles, et l'extraction de celui-ci.

### Secteurs

Les secteurs peuvent ménager des encoches, par exemple entre 2 et 20 encoches, mieux entre 4 et 16 encoches, par exemple 6 ou 8 encoches. Ces encoches ménagent chacune une ouverture d'encoche, les ouvertures d'encoche étant de préférence bien réparties sur le secteur correspondant, avec régularité et précision.

En outre, chaque secteur comporte deux flancs latéraux qui forment l'angle de couverture du secteur. Ils sont de préférence très légèrement en retrait de la ligne théorique centrée sur le diamètre d'alésage de l'empilement de tôles. Il est en outre utile de limiter le jeu entre deux secteurs consécutifs, afin d'éviter les entrefers parasites.

Par ailleurs, chaque secteur peut comporter une encoche centrale centrée sur un axe de symétrie du secteur. Le secteur peut comporter un nombre pair d'encoche, dont un nombre impair d'encoches pleines et deux demi-encoches de chaque côté.

Les secteurs peuvent avoir chacun une étendue angulaire β comprise entre 18 et 180 °, mieux entre 24 et 120 °, voire entre 30 et 90 °, étant par exemple de l'ordre de 60°. L'étendue angulaire est mesurée dans un plan transversal du stator, perpendiculairement à un axe longitudinal du dispositif, autour dudit axe. L'étendue angulaire est définie entre les faces latérales des secteurs, définissant l'interface entre les secteurs.

Dans un mode de réalisation, les secteurs peuvent avoir chacun une étendue angulaire β de 120°, une tôle comportant 3 secteurs angulaires destinés à coopérer avec 12 encoches chacun. Dans un autre mode de réalisation, les secteurs peuvent avoir chacun une étendue angulaire β de 60°, une tôle comportant 6 secteurs angulaires destinés à coopérer avec 6 encoches chacun. Dans un autre mode de réalisation encore, les secteurs peuvent avoir chacun une étendue angulaire β de 30°, une tôle comportant 12 secteurs angulaires destinés à coopérer avec 3 encoches chacun.

Dans un mode de réalisation, tous les secteurs ont une même étendue angulaire. Dans une variante de réalisation, tous les secteurs sont identiques. Ils peuvent être identiques par leur étendue angulaire, par leur forme, par la disposition de reliefs complémentaires en surface permettant de clipser les différentes tôles entre elles, cette liste n'étant pas limitative.

Dans un mode de réalisation, un secteur, voire tous les secteurs, peuvent avoir une certaine symétrie, partielle ou complète, par rapport à un plan perpendiculaire à un axe longitudinal, permettant d'assembler ceux-ci dans un sens ou dans l'autre lors de la fabrication de l'empilement. Les secteurs peuvent ainsi être « retournables », par exemple une couche sur deux. Une telle configuration peut permettre d'améliorer la raideur du stator après assemblage des secteurs.

Dans une variante de réalisation, un secteur, voire tous les secteurs, peuvent être symétriques par rapport à un plan perpendiculaire à un axe longitudinal.

Le feuilletage des secteurs permet de limiter les pertes par courant de Foucauld. Les secteurs de tôle peuvent être encollés ou agrafés entre eux, ou encore soudés entre eux.

Dans un mode de réalisation, une tôle, voir chaque tôle, peut avoir une certaine symétrie, partielle ou complète, par rapport à un plan perpendiculaire à un axe de rotation de la machine, permettant d'assembler celles-ci dans un sens ou dans l'autre lors de la fabrication du secteur. Les tôles peuvent ainsi être « retournables », par exemple une sur deux.

Les secteurs de tôle peuvent être regroupés en paquets de secteurs, une première interface définie entre deux paquets de secteurs adjacents situés à une première abscisse le long de l'axe longitudinal du dispositif étant décalée angulairement par rapport à une deuxième interface définie entre deux paquets de secteurs adjacents situés à une deuxième abscisse le long de l'axe longitudinal du dispositif, différente de la première abscisse.

Les secteurs d'un paquet peuvent être assemblés entre eux par clipsage ou collage. L'assemblage peut être effectué dans un outil de découpage utilisé pour découper les secteurs de tôle. Avantageusement, l'utilisation de paquets de tôles permet de faciliter l'empilage, en diminuant le nombre de pièces à empiler pour former l'empilement de tôles, et ainsi de minimiser le temps d'empilage et son coût. Le nombre de secteurs dans un paquet peut être compris entre 2 et 50, mieux entre 3 et 30, voire entre 4 et 20, par exemple entre 5 et 10. Le nombre de secteurs dans un paquet peut être déterminé de façon à ce que le nombre de paquets obtenus corresponde à la ou les hauteurs souhaitées pour un empilement complet.

Le décalage angulaire peut être compris entre une et dix dents, mieux entre deux et huit dents, par exemple de trois ou cinq dents. Il pourrait être dans certains modes de réalisation de quatre dents, ou de six dents par exemple.

Dans une variante de réalisation, la deuxième interface est située circonférentiellement entre la première interface et une troisième interface située à la même première abscisse. La disposition des interfaces est définie lorsque l'on observe le stator en section transversale, depuis l'axe de rotation de la machine.

Les secteurs peuvent être découpés dans une bande de tôle, tous dans le sens du laminage de la bande de tôle. Ainsi, le flux dans l'empilement peut circuler pour tous les secteurs dans le sens du laminage de la tôle.

Les secteurs peuvent être configurés de manière à optimiser les chutes de matière lors de leur découpage. On peut par exemple choisir leur étendue angulaire et/ou le nombre de dents et/ou d'encoches par secteur à cet effet.

Les secteurs peuvent être configurés de manière à optimiser la circulation magnétique dans le stator. On peut par exemple choisir leur étendue angulaire et/ou le nombre de dents et/ou d'encoches par secteur à cet effet.

On peut par exemple choisir la hauteur des paquets de secteurs en tenant compte de l'épaisseur des tôles et du foisonnement, qui est la quantité de fer que l'on retrouve dans une longueur donnée du stator. Le foisonnement peut dépendre de l'épaisseur des tôles, de la qualité des tôles, d'éventuels défauts locaux dans la tôle, de défauts de laminage, du vernis.

Tous les secteurs peuvent définir entre eux une interface s'étendant dans un plan sensiblement radial. Toutes les interfaces peuvent s'étendre chacune entièrement dans un plan radial. Chacune de ces interfaces peut être plane.

En variante l'interface peut ne pas être entièrement radiale, l'un des secteurs pouvant comporter un ou plusieurs reliefs destinés à coopérer avec un ou plusieurs reliefs correspondants de l'autre secteur adjacent. De tels reliefs peuvent permettre de favoriser l'immobilisation radiale d'un secteur par rapport au secteur adjacent, et de maintenir les secteurs fixes les uns par rapport aux autres, notamment radialement ainsi que circonférentiellement. Dans ce cas, l'interface peut s'étendre dans le plan radial, à l'exception du ou des reliefs coopérant.

Le plan radial de l'interface peut passer par une encoche, notamment en son milieu. Mieux, tous les plans radiaux de toutes les interfaces peuvent passer par des encoches, notamment en leur milieu. Dans un mode de réalisation, le plan radial de l'interface peut passer par une encoche, mais non pas en son milieu, mais décalé par rapport à celui-ci. Le plan radial de l'interface peut par exemple passer au 1/3 ou au 2/3 de l'encoche, ou à ¼ ou ¾ de celle-ci. Une telle configuration permet de casser de possibles effets de symétrie qui risque de créer des bruits.

Dans une variante de réalisation, le plan radial de l'interface peut passer par une dent, mieux tous les plans radiaux de toutes les interfaces peuvent passer par des dents. Dans une autre variante de réalisation encore, des plans radiaux de certaines des interfaces passent par des encoches et d'autres plans radiaux d'autres interfaces passent par des dents.

L'empilement de tôles peut être destiné à un stator de la machine électrique tournante. Les tôles sont des tôles statoriques.

L'invention a également pour objet un stator de machine électrique tournante compotant un empilement de tôles fabriqué avec le dispositif tel que décrit ci-dessus.

### Bobinages

Les bobinages peuvent être disposés dans les encoches de manière concentrée ou répartie. Par « concentrée », on comprend que les bobinages sont enroulés chacun autour d'une seule dent. Par « répartie », on entend qu'au moins l'un des bobinages passe successivement dans deux encoches non adjacentes. De préférence, les bobinages sont disposés dans les encoches de manière répartie, notamment lorsque le nombre de pôles du rotor est inférieur ou égal à 8.

Les bobinages comportent chacun au moins un conducteur électrique qui peut être en section transversale de forme circulaire, ou de forme polygonale à arêtes arrondies, préférentiellement de forme rectangulaire, cette liste n'étant pas limitative.

Les bobinages peuvent comporter chacun au moins un conducteur électrique de forme, en section transversale, rectangulaire, les bobinages étant notamment disposés de manière répartie dans les encoches.

Lorsque les conducteurs sont de section transversale circulaire, ils peuvent être disposés dans l'encoche selon un empilement hexagonal. Lorsque les conducteurs sont de section transversale polygonale, ils peuvent être disposés dans l'encoche en une ou plusieurs rangées orientées radialement. L'optimisation de l'empilement peut permettre de disposer dans les encoches une plus grande quantité de conducteurs électriques et donc d'obtenir un stator de plus grande puissance, à volume constant.

Les conducteurs électriques peuvent être disposés de manière aléatoire dans les encoches ou rangées. De préférence, les conducteurs électriques sont rangés dans les encoches. Par « rangés », on entend que les conducteurs ne sont pas disposés dans les encoches en vrac mais de manière ordonnée. Ils sont empilés dans les encoches de manière non aléatoire, étant par exemple disposés selon une ou plusieurs rangées de conducteurs électriques alignés, notamment selon une ou deux rangées, préférentiellement selon une unique rangée.

### Machine et rotor

L'invention a également pour objet une machine électrique tournante comportant un stator tel que défini précédemment. La machine peut être un moteur ou un générateur. La puissance de la machine peut être de l'ordre de quelques kVA, par exemple de l'ordre de 10kVA. La machine peut être synchrone ou asynchrone. La machine peut être à reluctance. Elle peut constituer un moteur synchrone.

La machine électrique tournante peut comporter un rotor. Le rotor peut être un rotor bobiné ou à aimants permanents. Dans le cas où la machine est destinée à fonctionner en alternateur, le rotor peut être bobiné. Dans le cas où la machine est destinée à fonctionner en moteur, le rotor peut être à aimants permanents.

Le rotor peut comporter une masse rotorique s'étendant selon l'axe de rotation et disposée autour d'un arbre. L'arbre peut comporter des moyens de transmission de couple pour l'entraînement en rotation de la masse rotorique.

Le rotor peut être monté en porte à faux ou non.

Le rotor peut être réalisé en plusieurs morceaux de rotor alignés suivant la direction axiale, par exemple trois morceaux. Chacun des morceaux peut être décalé angulairement par rapport aux morceaux adjacents (« *step skew* » en anglais). Le rotor peut être vrillé.

### Système de dépose des secteurs

Le dispositif peut comporter un système de dépose des secteurs de tôle. Le système de dépose des secteurs de tôle est configuré pour déposer un secteur sur l'empilement, les ouvertures des encoches du secteur faisant face à des linguets. En particulier, l'ouverture d'une encoche centrale est placée face à un linguet.

Le système de dépose peut également être configuré pour faire glisser le secteur vers le mandrin, le linguet ou les linguets permettant d'orienter le secteur en bonne position.

Une fois que le secteur est suffisamment proche du mandrin, l'attractivité magnétique des barreaux magnétisés permet d'attirer le secteur en contact avec le mandrin, de terminer son positionnement et de le maintenir en position.

On peut ensuite répéter l'opération pour le secteur suivant, avec un décalage angulaire approprié autour de l'axe longitudinal du dispositif. Le décalage angulaire peut correspondre à l'angle d'ouverture angulaire d'un secteur.

Lorsqu'une couche entière de secteurs de tôle ou de paquets de secteurs est déposée, on procède au dépôt de la couche suivante, avec un décalage entre les secteurs ou les paquets de secteurs d'une couche et les secteurs ou les paquets de secteurs de la couche suivante. Le décalage peut être d'un demi-secteur, par exemple.

Dans la mesure où le maintien des secteurs évite le risque que la dépose d'un secteur ne déplace un secteur adjacent, le dispositif peut comporter plusieurs systèmes de dépose autour du mandrin. Avantageusement, la cadence de dépose des secteurs est accélérée.

Lorsque l'empilement est complet, il est pressé et solidarisé, par exemple par soudage. L'assemblage de l'empilement de tôles peut par exemple être effectué avec des cordons de soudure le long de son diamètre extérieur. On peut par exemple, après pression de l'empilement et tout en maintenant la pression, déplacer l'empilement depuis le dispositif d'empilement selon l'invention vers un poste de soudage distinct du dispositif d'empilage. Cela permet avantageusement d'éviter le risque de polluer le mandrin par des projection de soudure, dans la mesure où le mandrin peut comporter une faible aimantation rémanente.

Ces opérations peuvent être réalisées au moyen d'un système de pressage et de préhension tel que décrit ci-après.

### Système de pressage et de préhension

L'invention a également pour objet un système de pressage et de préhension d'un empilement de tôles, notamment obtenu avec le dispositif tel que décrit ci-dessus, comportant une ou plusieurs pinces verticales configurées pour être serrées sur le plateau de support des secteurs.

Le système de pressage peut être descendu sur l'empilement de tôles à la fin de la réalisation de celui-ci. La sortie d'une tige de vérin fait descendre un plateau de serrage, qui vient coiffer l'empilement de tôles et appuyer sur celui-ci afin de le serrer. La pression exercée par la tige de vérin permet de limiter le foisonnement des tôles et de bien maintenir celles-ci.

Par ailleurs, la ou les pinces verticales sont configurées pour être serrées sur le plateau de support des secteurs. Leur serrage est effectué par la descente du plateau de serrage. Celui-ci comporte à cet effet un passage vertical pour chaque pince verticale, chaque pince verticale étant montée libre en rotation sur un plateau supérieur fixe. Ainsi, la descente du plateau de serrage provoque le déplacement angulaire de chaque pince verticale et le serrage des pinces verticales sur le plateau de support.

Après l'empilage et le pressage, la magnétisation peut être désactivée. Si nécessaire, un court champ inverse peut être appliqué afin d'annihiler le champ rémanent qui pourrait subsister dans les barreaux.

On peut ensuite activer la rétractation des barreaux, puis soulever l'empilement de tôles pour l'extraire du dispositif.

L'empilement de tôles peut alors être transféré au poste suivant de la chaine de fabrication, à savoir par exemple un poste de soudage, où sont réalisés des cordons de soudure pour assurer la cohésion complète de l'empilement de tôles.

Après son refroidissement, l'empilement de tôles peut recevoir des isolants et un bobinage.

Dans un mode de réalisation, le poste de découpe et d'assemblage peut être disposé directement en amont du dispositif selon l'invention, mais il pourrait être disposé différemment. Dans ce cas, les secteurs, éventuellement en paquets, peuvent être stockés dans des racks destinés à alimenter le dispositif selon l'invention.

### Procédé de fabrication

L'invention a encore pour objet un procédé de fabrication d'un empilement de tôle, notamment au moyen du dispositif tel que décrit ci-dessus, dans lequel :
- on fournit des secteurs de tôles sur un mandrin tel que décrit ci-dessus, notamment avec le système de dépose tel que décrit ci-dessus,
- on magnétise un ou des barreaux tels que décrit ci-dessus,
- on relâche la magnétisation des barreaux,
- optionnellement, on presse l'empilement de tôles, notamment avec le système de pressage tel que décrit ci-dessus,
- puis optionnellement, on soulève l'empilement de tôles pour l'extraire du dispositif, notamment avec le système de pressage et de préhension tel que décrit ci-dessus.

### Brève description des dessins

L'invention pourra être mieux comprise à la lecture de la description détaillée qui va suivre, d'un exemple de réalisation non limitatif de celle-ci, et à l'examen du dessin annexé, sur lequel :
[Fig 1] La figure 1 est une vue en coupe transversale, schématique et partielle, d'un dispositif de fabrication d'un empilement de tôles pour une machine électrique tournante réalisé conformément à l'invention.
[Fig 2] La figure 2 est une vue de dessus d'un secteur pris isolément.
[Fig 3] La figure 3 est une vue en coupe longitudinale, schématique et partielle, du dispositif de la figure 1.
[Fig 4] La figure 4 est une vue en coupe longitudinale, schématique et partielle, du dispositif de la figure 1 avec le système de pressage et de préhension.
[Fig 5] La figure 5 est une vue de dessus, schématique et partielle, d'une ligne de production comportant le dispositif selon l'invention.

### Description détaillée

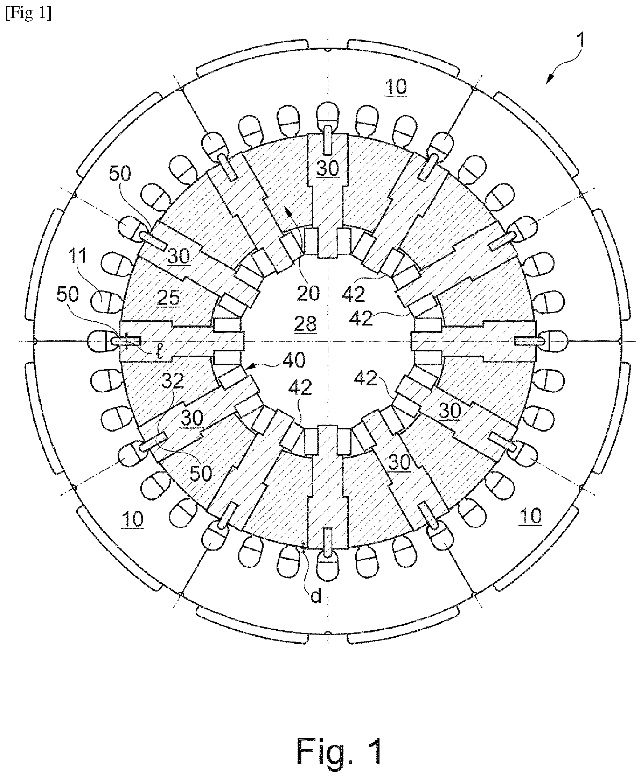

On a illustré à la figure 1 un dispositif 1 de fabrication d'un empilement E de tôles pour une machine électrique tournante.

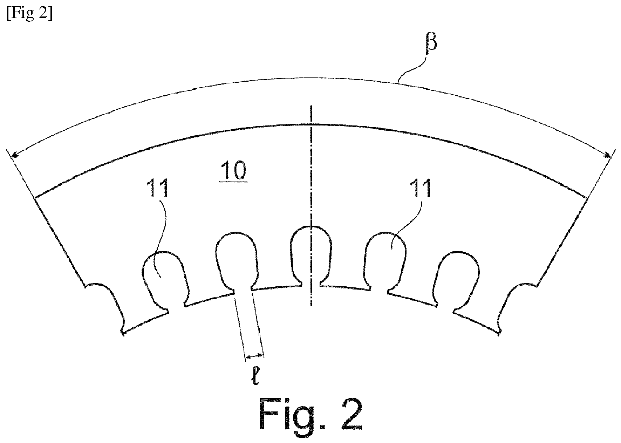

Chaque tôle comporte une pluralité de secteurs 10 de tôle formant des encoches 11, comme illustré sur la figure 2. Les secteurs d'une tôle ne sont pas reliés entre eux. Ils sont séparés les uns des autres. Une tôle comporte dans cet exemple 6 secteurs, comme visible sur la figure 1. L'empilement de tôles est destiné à la fabrication d'un stator de machine électrique tournante. La machine électrique tournante est destinée à comporter un rotor et un stator. Le stator permet de générer un champ magnétique tournant d'entraînement du rotor en rotation, dans le cadre d'un moteur synchrone, et dans le cas d'un alternateur, la rotation du rotor induit une force électromotrice dans les bobinages du stator.

Les secteurs 10 de tôle sont de préférence regroupés en paquets de secteurs. Une première interface définie entre deux paquets de secteurs adjacents situés à une première abscisse le long de l'axe longitudinal du dispositif peut être décalée angulairement par rapport à une deuxième interface définie entre deux paquets de secteurs adjacents situés à une deuxième abscisse le long de l'axe longitudinal du dispositif, différente de la première abscisse.

Les tôles ménagent un alésage central, dans lequel est placé un mandrin 20 du dispositif 1, qui reçoit les secteurs 10 empilés. Le mandrin 20 comporte :
- un corps de mandrin 25 pourvu de rainures longitudinales 26,
- des barreaux 30 reçus dans les rainures longitudinales 26 du corps de mandrin 25, les barreaux étant magnétisables,
- un système de magnétisation 40 des barreaux 30, placé dans un alésage central 28 du corps de mandrin 25, et
- des linguets d'alignement 50, destinés à être reçus dans les encoches 11 des tôles de façon à assurer l'alignement des encoches 11.

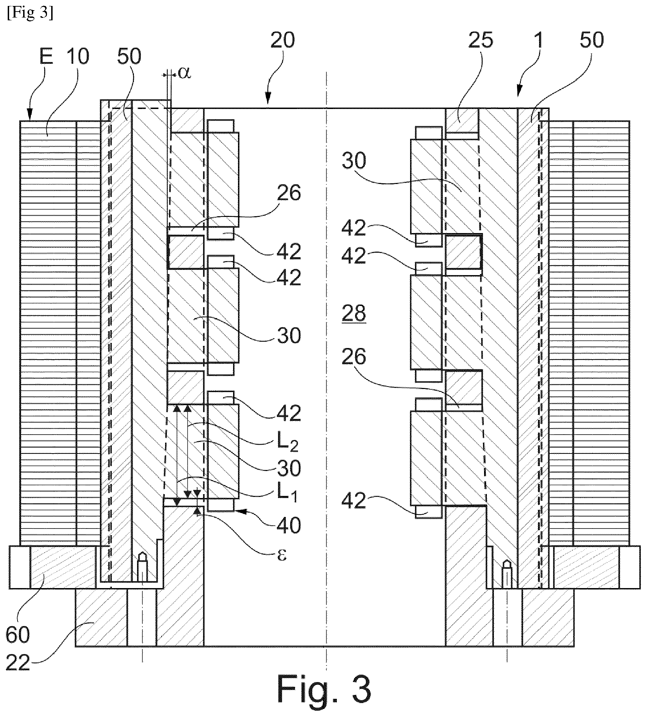

Le dispositif comporte en outre un plateau de support 60 des secteurs 10, comme illustré sur la figure 3. Ce plateau de support 60 peut être réalisé dans un matériau amagnétique. Il peut être disposé sur une base 22 du mandrin. Ce plateau de support va permettre également de faciliter le pressage ultérieur de l'empilement de tôles, et l'extraction de celui-ci.

Le corps de mandrin 25 est réalisé dans un matériau amagnétique, notamment paramagnétique, ce qui permet de ne pas nuire au bon positionnement des secteurs.

Les barreaux sont réalisés dans un matériau ferromagnétique doux.

Le système de magnétisation permet de magnétiser les barreaux, ceux-ci pouvant ainsi attirer, lorsque magnétisés, les secteurs de tôle qui viennent en rapprochement du corps de mandrin, subissant une poussée radiale de l'extérieur vers le centre. En effet, les tôles sont fortement sensibles aux champs magnétiques.

Le dispositif selon l'invention permet également de déposer des secteurs de tôles au fur et à mesure de la réalisation de l'empilement, cette dépose n'étant pas empêchée par le maintien des secteurs sur le mandrin grâce à la magnétisation de barreaux.

Les secteurs 10 déjà en place sont bien maintenus, de sorte qu'ils ne risquent pas de se déplacer. Ainsi, aucune opération de replacement ou de re-conformage n'est nécessaire.

Le mandrin 20 comporte plusieurs rangées circonférentielles de barreaux 30 réparties longitudinalement autour de l'alésage central du corps de mandrin. Dans l'exemple décrit, il comporte trois rangées circonférentielles de barreaux 30, qui sont dans cet exemple réparties régulièrement, avec un écartement constant entre deux rangées circonférentielles consécutives. Les barreaux 30 dépassent radialement du corps de mandrin vers l'intérieur de celui-ci, dans son alésage central 28.

Le système de magnétisation 40 comportent des bobines 42 disposées sur les barreaux dans l'alésage central 28 du corps de mandrin 25. L'utilisation de bobines 42 permet avantageusement de moduler la magnétisation de manière très souple. On peut démarrer ou arrêter la magnétisation facilement.

La magnétisation des barreaux 30 peut être variable. Par exemple, elle peut être plus élevée lorsque le secteur adjacent aux barreaux est en train d'être déposé, et plus réduite lorsqu'il est seulement maintenu sur le mandrin. En particulier, on peut réduire la magnétisation dans le bas de l'empilage, car les secteurs y sont en partie maintenus également par le poids de l'empilage.

Cela peut être obtenu en modifiant le courant circulant dans les bobines 42 en fonction de leur position, notamment en fonction de leur position circonférentielle et/ou de leur position longitudinale, le long d'un axe longitudinal du dispositif.

Par ailleurs, les barreaux 30 dépassent radialement légèrement du corps de mandrin 25 vers l'extérieur, d'une distance d par exemple de l'ordre de 0,5 mm. Un rapport de la distance d sur le rayon du corps du mandrin 25 peut par exemple être inférieur à 1 %.

Ainsi, les barreaux 30 forment le diamètre extérieur du mandrin 20 dans son ensemble, le diamètre extérieur du mandrin correspondant sensiblement au diamètre d'alésage du stator à fabriquer. Cette configuration permet que les tôles de l'empilement ne soient pas en contact avec le corps de mandrin 25, ce qui facilite l'extraction ultérieure de l'empilement de tôles du mandrin 20, en évitant les frottements.

Afin de faciliter l'extraction de l'empilement de tôles du mandrin 20 une fois l'empilement terminé, le dispositif peut comporter une pente sur sa surface extérieure, comme illustré à la figure 3. Cela peut permettre une légère rétractation des barreaux vers l'axe longitudinal du dispositif, par rapport à l'empilement de tôles.

La pente est dans cet exemple obtenue par la forme du corps de mandrin 25, qui comporte une surface extérieure inclinée d'un angle α par rapport à un axe longitudinal du dispositif, lequel est vertical. Les barreaux peuvent du fait de cette inclinaison être également inclinés par rapport à un axe longitudinal du dispositif. La pente peut permettre une translation longitudinale des barreaux.

Les barreaux sont configurés pour pouvoir être déplacés longitudinalement, entre une position d'empilage visible sur le côté droit de la figure 3, et une position dans laquelle les barreaux sont rétractés, visible sur le côté gauche de la figure 3. Ce déplacement peut être faible, étant par exemple de l'ordre de de 4 mm.

A cet effet, les rainures longitudinales 26 du corps de mandrin 25 ont une longueur L1 mesurée selon l'axe longitudinal du dispositif qui est un peu supérieure à une longueur L2 d'un barreau, mesurée selon l'axe longitudinal du dispositif, d'une longueur ε, comme illustré sur la figure 3. La longueur ε est par exemple de l'ordre de 4 mm.

Par ailleurs, les linguets d'alignement 50 sont réalisés dans un matériau amagnétique, notamment paramagnétique, afin de favoriser leur pénétration dans les encoches 11 des tôles et de ne pas l'empêcher. Cela permet de ne pas nuire au bon positionnement des secteurs.

Une largeur 1 des linguets d'alignement 50 en section transversale diminue lorsque l'on s'éloigne d'un axe longitudinal du dispositif. La largeur des linguets peut être sensiblement égale à l'ouverture des encoches au niveau du diamètre d'alésage de l'empilement de tôles, notamment avec un léger jeu permettant d'assurer le coulissement, comme illustré sur les figures 2 et 3. En outre, cette largeur peut diminuer au fur et à mesure que le linguet s'étend dans l'encoche correspondante de l'empilement de tôles. Ainsi, l'insertion du secteur sur les linguets est facilitée, et le guidage plus aisé.

Les linguets d'alignement 50 sont reçus dans des entailles longitudinales 32 de chaque barreau 30, et ils s'étendent radialement au-delà du diamètre de l'alésage central ménagé dans les tôles. Une entaille 32 d'un barreau 30 est ici centrée par rapport audit barreau 30.

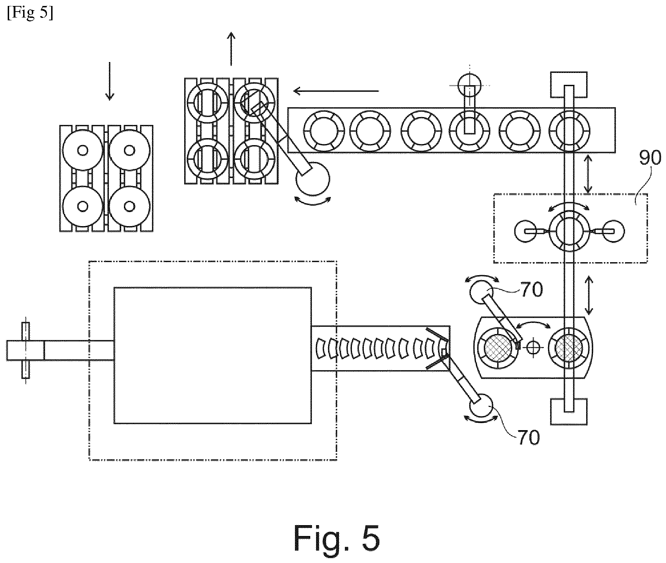

Le dispositif comporte également un système de dépose 70 des secteurs de tôle comme visible sur la figure 5. Le système de dépose 70 des secteurs de tôle est configuré pour déposer un secteur sur l'empilement avec un bras robotisé par exemple, les ouvertures des encoches du secteur faisant face à des linguets. En particulier, l'ouverture d'une encoche centrale est placée face à un linguet. Le système de dépose peut également être configuré pour faire glisser le secteur vers le mandrin, le linguet ou les linguets permettant d'orienter le secteur en bonne position.

Une fois que le secteur est suffisamment proche du mandrin, l'attractivité magnétique des barreaux magnétisés permet d'attirer le secteur en contact avec le mandrin, de terminer son positionnement et de le maintenir en position.

On peut ensuite répéter l'opération pour le secteur suivant, avec un décalage angulaire approprié autour de l'axe longitudinal du dispositif, avec le même bras robotisé ou un deuxième bras robotisé. Le décalage angulaire peut correspondre à l'angle d'ouverture angulaire d'un secteur.

Lorsqu'une couche entière de secteurs de tôle ou de paquets de secteurs est déposée, on procède au dépôt de la couche suivante, avec un décalage entre les secteurs ou les paquets de secteurs d'une couche et les secteurs ou les paquets de secteurs de la couche suivante. Le décalage peut être d'un demi-secteur, par exemple.

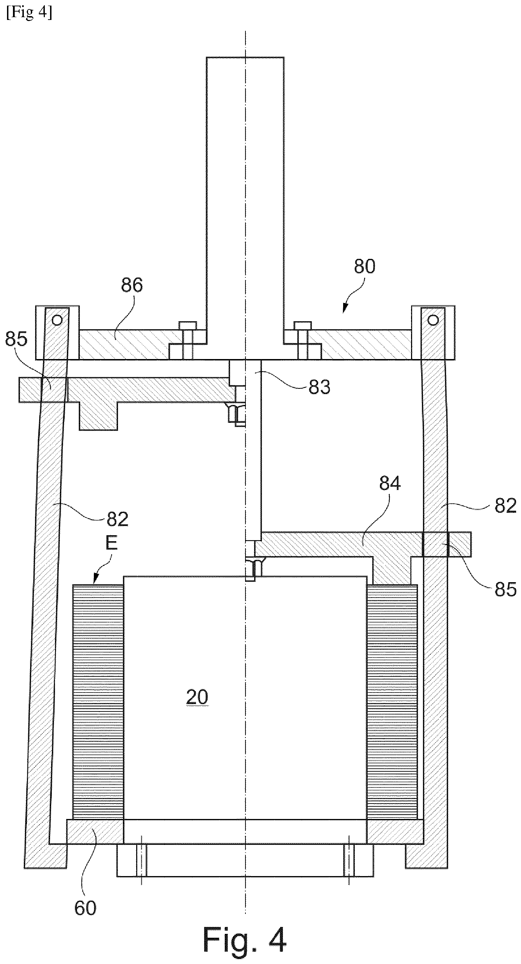

Lorsque l'empilement est complet, il est pressé et extrait du dispositif 1. Ces opérations peuvent être réalisées au moyen d'un système de pressage et de préhension 80 illustré à la figure 4. Celui-ci comporte une pluralité de pinces verticales 82 configurées pour être serrées sur le plateau de support 60 des secteurs.

Le système de pressage 80 peut être descendu sur l'empilement de tôles à la fin de la réalisation de celui-ci, d'une position ouverte illustrée à gauche sur la figure 4 à une position de pressage illustrée à droite sur la figure 4. La sortie d'une tige de vérin 83 fait descendre un plateau de serrage 84, qui vient coiffer l'empilement de tôles et appuyer sur celui-ci afin de le serrer. La pression exercée par la tige de vérin 83 permet d'éviter le foisonnement des tôles et de bien maintenir celles-ci.

Par ailleurs, la ou les pinces verticales 82 sont configurées pour être serrées sur le plateau de support 60 des secteurs. Leur serrage est effectué par la descente du plateau de serrage 84, comme illustré sur la figure 4. Celui-ci comporte à cet effet un passage vertical 85 pour chaque pince verticale 82, chaque pince verticale 82 étant montée libre en rotation sur un plateau supérieur fixe 86. Ainsi, la descente du plateau de serrage 84 provoque le déplacement angulaire de chaque pince verticale 82 et le serrage des pinces verticales sur le plateau de support 60.

Après l'empilage et le pressage, la magnétisation peut être désactivée. Si nécessaire, un court champ inverse peut être appliqué afin d'annihiler le champ rémanent qui pourrait subsister dans les barreaux.

On peut ensuite activer la rétractation des barreaux, puis soulever l'empilement de tôles pour l'extraire du dispositif.

Lorsque l'empilement est complet, il est pressé et solidarisé, par exemple par soudage. L'assemblage de l'empilement de tôles peut par exemple être effectué avec des cordons de soudure le long de son diamètre extérieur, à un poste de soudage 90. On peut par exemple, après pression de l'empilement et tout en maintenant la pression, déplacer l'empilement depuis le dispositif d'empilement selon l'invention vers un poste de soudage 90 distinct du dispositif d'empilage.

Après son refroidissement, l'empilement de tôles peut recevoir des isolants et un bobinage.

L'empilement de tôles à réaliser comporte dans l'exemple décrit 36 encoches équidistantes destinées à recevoir le bobinage d'un stator d'alternateur. Le circuit magnétique est divisé en 6 secteurs de 60° chacun. Chaque secteur comporte 6 encoches, dont 5 encoches pleines et deux demi-encoches. Une encoche est centrée sur l'axe de symétrie du secteur.

Bien entendu, l'invention n'est pas limitée à ces valeurs et le stator pourrait comporter un nombre différent d'encoches et de secteurs.

## Revendications

1. Dispositif (1) de fabrication d'un empilement de tôles (E) pour une machine électrique tournante, chaque tôle comportant une pluralité de secteurs (10) de tôle formant des encoches (11), les tôles ménageant un alésage central, le dispositif (1) comportant un mandrin (20) pour recevoir les secteurs (10) de tôles empilés, le mandrin (20) comportant :
- un corps de mandrin (25) pourvu de rainures longitudinales (26),
- des barreaux (30) reçus dans les rainures longitudinales (26) du corps de mandrin (25), les barreaux (30) étant magnétisables,
- un système de magnétisation (40) des barreaux, et
- des linguets d'alignement (50), destinés à être reçus dans les encoches (11) des tôles de façon à assurer l'alignement des encoches (11).

2. Dispositif selon la revendication précédente, le corps de mandrin (25) étant réalisé dans un matériau amagnétique, notamment paramagnétique.

3. Dispositif selon l'une quelconque des revendications précédentes, les barreaux (30) étant réalisés dans un matériau ferromagnétique doux.

4. Dispositif selon l'une quelconque des revendications précédentes, les barreaux (30) dépassant radialement légèrement du corps de mandrin (25) vers l'extérieur.

5. Dispositif selon l'une quelconque des revendications précédentes, les barreaux (30) dépassant radialement du corps de mandrin (25) vers l'intérieur de celui-ci, dans son alésage central (28).

6. Dispositif selon l'une quelconque des revendications précédentes, le système de magnétisation (40) comportant des bobines (42) disposées sur des ou sur tous les barreaux (30) dans l'alésage central (28) du corps de mandrin (25).

7. Dispositif selon l'une quelconque des revendications précédentes, le mandrin (20) comportant plusieurs rangées circonférentielles de barreaux (30) réparties longitudinalement autour de l'alésage central (28) du corps de mandrin (25).

8. Dispositif selon l'une quelconque des revendications précédentes, les linguets d'alignement (50) étant réalisés dans un matériau amagnétique, notamment paramagnétique.

9. Dispositif selon l'une quelconque des revendications précédentes, une largeur (1) des linguets d'alignement (50) en section transversale diminuant lorsque l'on s'éloigne d'un axe longitudinal du dispositif.

10. Dispositif selon l'une quelconque des revendications précédentes, les linguets d'alignement (50) étant reçus dans des entailles longitudinales (32) de chaque barreau (30), qui s'étendent radialement au-delà du diamètre de l'alésage central ménagé dans les tôles.

11. Dispositif selon l'une quelconque des revendications précédentes, les barreaux étant configurés pour pouvoir être déplacés longitudinalement, le dispositif comportant notamment une pente sur sa surface extérieure, le corps de mandrin, comportant notamment une surface extérieure inclinée d'un angle α par rapport à un axe longitudinal du dispositif vertical.

12. Dispositif selon l'une quelconque des revendications précédentes, les secteurs (10) de tôle étant regroupés en paquets de secteurs, une première interface définie entre deux paquets de secteurs adjacents situés à une première abscisse le long de l'axe longitudinal du dispositif étant décalée angulairement par rapport à une deuxième interface définie entre deux paquets de secteurs adjacents situés à une deuxième abscisse le long de l'axe longitudinal du dispositif, différente de la première abscisse.

13. Dispositif selon l'une quelconque des revendications précédentes, l'empilement de tôles (E) étant destiné à un stator de la machine électrique tournante.

14. Dispositif selon l'une quelconque des revendications précédentes, le dispositif (1) comportant un système de dépose (70) des secteurs de tôle.

15. Système de pressage et de préhension (80) d'un empilement de tôles, notamment obtenu avec le dispositif selon l'une quelconque des revendications précédentes, comportant une ou plusieurs pinces verticales (82) configurées pour être serrées sur un plateau de support (60) des secteurs (10).
